# EUROPÄISCHE PATENTSCHRIFT

(11) **EP 1 340 534 B1**
(45) Veröffentlichungstag und Bekanntmachung des Hinweises auf die Patenterteilung: **23.03.2005**
(21) Anmeldenummer: 03008579.9
(22) Anmeldetag: 12.11.1997
(51) Int. Cl.: B01D 63/02, B01D 63/06, A61M 1/18, B01D 65/00

(54) **Hohlfasermembrantrennvorrichtung**
Hollow fiber membrane separation device
Dispositif de séparation ayant une membrane de fibre creuse

(30) Priorität: 21.11.1996 DE 19648275; 21.11.1996 DE 19648276; 26.06.1997 DE 19727250; 07.10.1997 DE 19744336
(43) Veröffentlichungstag der Anmeldung: 03.09.2003
(62) Teilanmeldung aus: 97119797.5
(73) Patentinhaber: Fresenius Medical Care Deutschland GmbH, 61352 Bad Homburg v.d.H. (DE)
(72) Erfinder: Hahmann, Uwe, 75233 Tiefenbronn (DE); Heilmann, Klaus, 66606 St. Wendel (DE); Schönhofen, Michael, Dr., 66606 St. Wendel (DE); Wiesen, Gerhard, 66606 St. Wendel (DE)
(74) Vertreter: Laufhütte, Dieter, Dr.-Ing.

(56) Entgegenhaltungen:
- EP-A- 0 305 687
- DE-A- 2 646 358
- DE-A- 4 036 978

## Beschreibung

Die Erfindung betrifft eine Hohlfasermembrantrennvorrichtung nach dem Oberbegriff des Anspruchs 1.

Aus der DE-OS 26 46 358 ist eine Hohlfasermembrantrennvorrichtung bekannt, bei der das Hohlfaserbündel ringartig ein zentrales Rohr einfaßt und die Enden des ringförmigen Hohlfaserbündels durch eine Vergußmasse sowohl gegenüber dem zentralen Rohr als auch gegenüber dem dieses konzentrisch einfassenden Gehäusemantel abgedichtet sind.

Eine andere bekannte Hohlfasermembrantrennvorrichtung besteht ebenfalls aus einem rohrförmigen Gehäuse, das das Hohlfaserbündel einfaßt, wobei die Enden des Hohlfaserbündels durch eine Vergußmasse mit den Enden des rohrförmigen Gehäuses verbunden sind. Bei dieser Hohlfasermembrantrennvorrichtung ist das Gehäuse jeweils angrenzend an die Vergußmassen mit radialen Anschlußstutzen versehen, die die Ein- und Ausgänge zu dem zweiten Strömungsraum bilden. Zur Öffnung der von den Vergußmassen eingefaßten Kapillarröhren des Hohlfaserbündels werden diese an ihren Stirnseiten angeschnitten. Auf die Enden des rohrförmigen Mantels werden sodann dichtend Kappen aufgesetzt, die mit Stutzen versehen sind, die die Ein- und Ausgänge des ersten Strömungsraums bilden.

Diese bekannten Hohlfasermembrantrennvorrichtungen werden beispielsweise als Kapillardialysatoren eingesetzt, wobei die durch die Kapillarröhren-Durchgänge gebildeten Strömungsräume den Blutraum und das die Hohlfaserbündel einfassende Gehäuse den Dialysatraum bilden, in dem die Hohlfasern von dem Dialysat umspült werden.

Bei den bekannten Hohlfasermembrantrennvorrichtungen besteht das Problem, daß die üblicherweise aus PU bestehende Vergußmasse, die scheibenförmig aushärtet und eine Abdichtung zwischen den beiden Strömungsräumen bildet, bei ihrer Aushärtung schrumpft, so daß sich in den durch die Vergußmassen gebildeten scheibenförmigen Abdichtungen Spannungen ausbilden, die zu Rissen und auch zu Ablösungen der Vergußmassen von dem diese einfassenden Gehäusemantel führen können. Die Folge ist, daß die beiden Strömungsräume nicht mehr vollständig gegeneinander abgedichtet sind und daß die die Dichtung bewirkende Adhäsion der Dichtungsmassen zu dem das Faserbündel einfassenden Gehäuse nicht mehr mit Sicherheit gewährleistet ist.

Bei einer aus EP 0 305 687 B1 bekannten Hohlfasermembrantrennvorrichtung der eingangs angegebenen Art sind die scheibenförmigen Vergußmassen von zwischengeschalteten Ringen eingefaßt, an denen die Vergußmassen nicht haften, so daß diese spannungsfrei schrumpfen können. Durch dieses spannungsfreie Schrumpfen werden Risse in den scheibenförmigen Vergußmassen verhindert und auf eine unmittelbare Abdichtung zwischen dem Umfangsrand der Vergußmassen und dem diese einfassenden Gehäuse wird verzichtet. Um dennoch eine Abdichtung zwischen den beiden Strömungsräumen zu erhalten, ist der erste Raum durch auf die Vergußmasse aufgesetzte Kappen durch über den Randbereich der Vergußmasse verlaufenden Dichtungen, gegen die die Kappen angedrückt sind, abgedichtet.

Bei dieser bekannten Hohlfasermembrantrennvorrichtung besteht nun das Problem, eine Verbindung zu dem zweiten Raum zu schaffen, der durch das das Faserbündel einfassende Gehäuse gebildet ist. Diese Verbindung wird bei der bekannten Hohlfasermembrantrennvorrichtung dadurch geschaffen, daß das rohrförmige Gehäuse an seinen Endbereichen in seinem Durchmesser etwa muffenartig verbreitert ist, wobei diese Verbreiterungen mit radialen Anschlußstutzen versehen sind. Diese Anschlußstutzen münden in den durch das Gehäuse gebildeten zweiten Raum, wobei die verbreiterten Abschnitte des Gehäuses gegenüber dem ersten Raum dadurch abgedichtet sind, daß die Kappen dichtend an die verbreiterten Abschnitte anschließen, so daß durch den Kappenrand eine Abdichtung nach außen und durch den umlaufenden Dichtungsring eine Abdichtung gegenüber dem ersten Raum geschaffen ist. Diese Art der Anordnung der Anschlußstutzen an den durch das Gehäuse gebildeten zweiten Raum ist verhältnismäßig aufwendig. Außerdem kommt es zu schlecht durchspülten Toträumen oberhalb bzw. unterhalb der Anschlußstutzen, an denen sich Gasblasen sammeln können. Dies kann sich nachteilig bei der Desinfektion oder Sterilisation sowie allgemein bei der Handhabung auswirken.

Aufgabe der Erfindung ist es daher, eine Hohlfasermembrantrennvorrichtung der eingangs angegebenen Art zu schaffen, bei der einerseits mit Sicherheit gewährleistet ist, daß die beiden Strömungsräume durch die ausgehärteten Vergußmassen gegeneinander abgedichtet sind, und andererseits eine einfache Anordnung der Anschlußstutzen für den zweiten Strömungsraum ohne schlecht durchspülte Toträume geschaffen ist.

Erfindungsgemäß wird diese Aufgabe bei einer Hohlfasermembrantrennvorrichtung der eingangs angegebenen Art durch die kennzeichnenden Merkmale des Patentanspruchs 1 gelöst.

Bei der erfindungsgemäßen Hohlfasermembrantrennvorrichtung werden die Vergußmassen in diese stirnseitig und an ihren Seiten einfassenden Formen ausgehärtet, so daß die Vergußmassen spannungsfrei schrumpfen können. Die Dichtung zwischen den so gebildeten scheibenförmigen Vergußmassen und den ersten Kappen wird, wie bei der bekannten Hohlfasermembrantrennvorrichtung, durch eingelegte Dichtungsmittel bewirkt. Um einen einfachen Zugang zu dem zweiten Strömungsraum zu schaffen, sind die entsprechenden Anschlußstutzen aber nicht mehr an dem Gehäuse selbst, sondern an der zweiten, die erste Kappe übergreifenden Kappe angeordnet. Dies führt zu einer Vereinfachung der Hohlfasermembrantrennvorrichtung.

Zweckmäßigerweise überragen die inneren Ränder der die Vergußmassen übergreifenden zweiten Kappen die Vergußmassen nach innen hin, so daß zwischen der Umfangswandung der zweiten Kappen und den Vergußmassen bzw. den von diesen eingefaßten Faserbündeln ein Strömungsraum geschaffen ist.

Nach einer bevorzugten Ausführungsform ist vorgesehen, daß das rohrabschnittförmige Gehäuse, in das das Hohlfaserbündel eingezogen ist, an den Enden seines Mantels mit durch frei auslaufende, axiale Kerben oder Einschnitte gebildeten zahnoder zinnenartigen Vorsprüngen versehen ist, deren äußeren Bereiche in die Vergußmassen eingebunden sind, so daß die freien inneren Bereiche der Kerben oder Einschnitte Durchflußöffnungen für die Flüssigkeit bilden. Da das rohrabschnittförmige oder vorzugsweise mit einem kreisrunden Querschnitt versehene Gehäuse aus einem Material mit elastischen Eigenschaften, beispielsweise PC, besteht, sind durch die Kerben oder Einschnitte aus federnden Zungen bestehende kranzförmige Ränder gebildet, die von der Vergußmasse zumindest teilweise eingefaßt sind. Härtet sodann die Vergußmasse zu den Scheiben aus, können diese im wesentlichen spannungsfrei schrumpfen, weil die federnden Zungen diesem Schrumpfen keinen nennenswerten Widerstand entgegensetzen. Nach dieser erfindungsgemäßen Ausgestaltung sind die durch die Vergußmassen gebildeten Scheiben fest mit den Enden des rohrförmigen Gehäuses verbunden, so daß sich sodann durch die beiden einander übergreifenden Kappen mit den entsprechenden Dichtungsmitteln die beiden Strömungsräume sicher voneinander trennen lassen.

Die aus EP 0 305 387 B1 bekannte Hohlfasermembrantrennvorrichtung weist zwar ein rohrförmiges Gehäuse auf, bei dem in den verbreiterten Endabschnitten durch Kerben oder Einschnitte gebildete kranzförmige Ränder geschaffen sind, die teilweise von den zu Scheiben ausgehärteten Vergußmassen eingefaßt sind. Diese aus rechteckigen Vorsprüngen bestehenden kranzförmigen Ränder bedingen aber eine komplizierte Ausgestaltung der Gehäuse, weil diese zusätzlich noch von den verbreiterten Endabschnitten des Gehäuses eingefaßt sind, die mit den Anschlußstutzen versehen sind.

Zweckmäßigerweise ist das Gehäuse im Bereich der inneren Enden der Vorsprünge mit radialen Flanschen versehen, auf denen sich die Ränder der zweiten Kappen dichtend abstützen oder an denen diese befestigt sind.

Zweckmäßigerweise ist der Abstand der Vorsprünge in Umfangsrichtung voneinander größer als deren Breite.

Zweckmäßigerweise sind die durch die Kerben oder Einschnitte gebildeten zahn- oder zinnenartigen Vorsprünge mit radialen und/oder sich in Umfangsrichtung erstreckenden Vorsprünge versehen.

Ein Ausführungsbeispiel der Erfindung wird nachstehend anhand der Zeichnung näher erläutert. In dieser zeigt
- Fig. 1:: einen Längsschnitt durch eine Seite der erfindungsgemäßen Hohlfasermembrantrennvorrichtung
- Fig. 2 bis 4:: Schnitte durch die Stirnseite einer durch die Vergußmasse gebildeten Scheibe,
- Fig. 5:: einen Längsschnitt durch das Gehäuse einer bekannten Hohlfasermembrantrennvorrichtung nach dem Stand der Technik,
- Fig. 6:: einen Schnitt durch den oberen Bereich des Gehäuses einer erfindungsgemäßen Hohlfasermembrantrennvorrichtung mit geschlossenem Ringraum,
- Fig. 7:: eine Seitenansicht einer bekannten Hohlfasermembrantrennvorrichtung und
- Fig. 8:: einen Schnitt durch die bekannte Hohlfasermembrantrennvorrichtung nach Fig. 7.

Die Hohlfasermembrantrennvorrichtung 1 besteht aus einem rohrabschnittförmigen Gehäuse 2 aus Kunststoff, beispielsweise PC, dessen Ränder zu einem radialen ringförmigen Flansch 3 auslaufen. Mit dem inneren Randbereich dieses Flansches 3 oder dem Übergangsbereich zwischen dem zylindrischen Rohrteil und dem Flansch ist mit dem Gehäuse ein zylindrischer Ring verbunden, der mit Einschnitten 5 versehen ist, die rechteckige, frei auslaufende Kerben bilden. Zwischen diesen Kerben 5 sind zinnen- oder zungenartige, ebenfalls im wesentlichen rechteckige und sich in axialer Richtung erstreckende Vorsprünge 4 gebildet. Diese Vorsprünge 4 weisen an ihren oberen äußeren Endbereichen radial nach außen weisende Vorsprünge 6 auf.

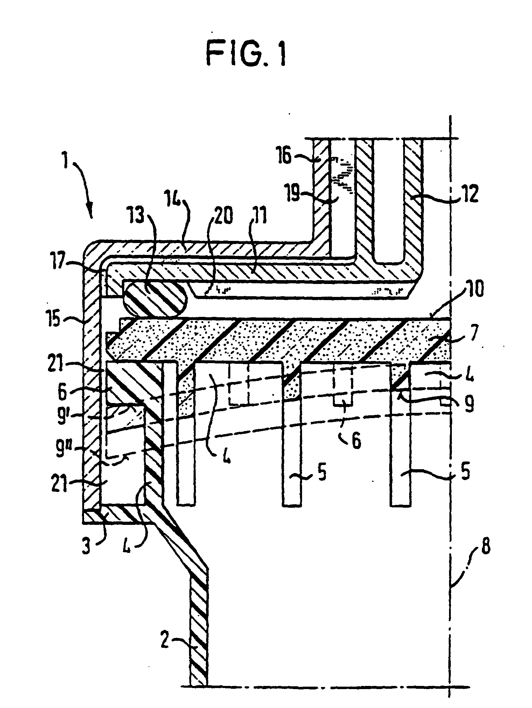

In das rohrförmige Gehäuse 2 ist ein in Figur 1 nicht dargestelltes Hohlfaserbündel eingebracht. Die Enden dieses Hohlfaserbündels sind in einer beispielsweise aus PU bestehenden Vergußmasse 7 eingebettet, die nach ihrer Aushärtung scheibenförmig ist. Da die Vergußmasse während ihrer Aushärtung mit um eine rechtwinkelig auf der Gehäuseachse 8 stehenden Rotationsachse zentrifugiert wird, besitzt die Scheibe 7 in der aus Fig. 1 ersichtlichen Draufsicht eine zylinderschalenförmige Innenseite 9. Die Aushärtung erfolgt in einer mitrotierenden Kappe, die die Stirnseite und die Umfangsseite begrenzt. Der Toleranzbereich, in dem sich die zylinderschalenförmige Innenseite 9 bewegen kann, ist durch die gestrichelten Linien 9' und 9" angedeutet.

Nach dem Aushärten der Vergußmasse wird die Scheibe 7 an ihrer Stirnseite 10 angeschnitten, so daß die Kapillarröhrchen des in die Vergußmasse eingebetteten Hohlfaserbündels geöffnet werden.

Auf die Stirnseite 10 der Scheibe 7 wird dann eine erste Kappe 11 mit zentralem Anschlußstutzen 12 aufgelegt, die an ihrem Randbereich durch einen O-Ring 13 gegenüber dem von Hohlfasern freien Randbereich der Scheibe 7 abgedichtet ist.

Die erste Kappe 11 ist von einer zweiten Kappe 14 mit zylindrischer Wandung 15 eingefaßt, deren Randbereich mit dem äußeren Rand des Ringflansches 3 flüssigkeitsdicht verbunden ist. Die zweite Kappe 14 besitzt einen zentralen zylindrischen, einen Anschlußstutzen bildenden Fortsatz 16, der den doppelwandig ausgebildeten Anschlußstutzen 12 der ersten Kappe 11 konzentrisch einfaßt. Die zweite Kappe 14 ist auf ihrer Innenseite strahlenförmig mit Stegen 17 versehen, die den erforderlichen Abstand zu der ersten Kappe 11 gewährleisten und damit Strömungskanäle begrenzen. Auch der zylindrische Fortsatz 16 ist auf seiner Innenseite mit radialen Stegen 19 versehen, die sich auf den äußeren Mantel des Stutzens 12 abstützen und Durchflußkanäle begrenzen.

Die erste Kappe 11 ist auf ihrer Unterseite sternförmig mit radialen Stegen 20 versehen, die der Aussteifung dienen.

Die zweite Kappe 14 faßt mit ihrem zylindrischen Rand 15 die Scheibe 7 und die zinnen- oder zahnförmigen Fortsätze 4 mit radialem Abstand ein, so daß ein Ringraum 21 gebildet ist, durch den die durch den Stutzen 16 eingeleitete Flüssigkeit durch die inneren Bereiche der Schlitze 5 in den das Hohlfaserbündel einfassenden Strömungsraum eintreten kann.

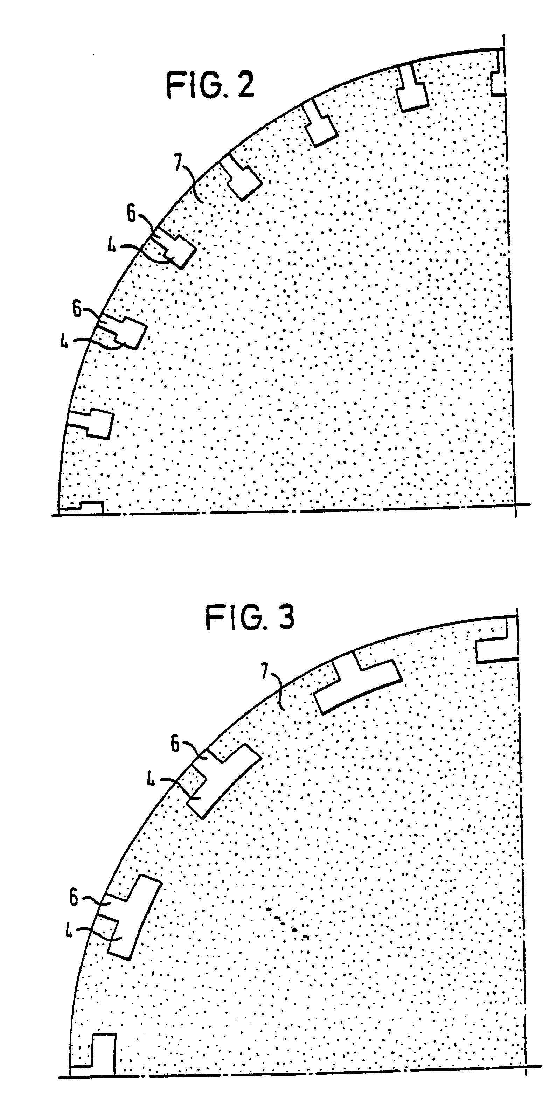

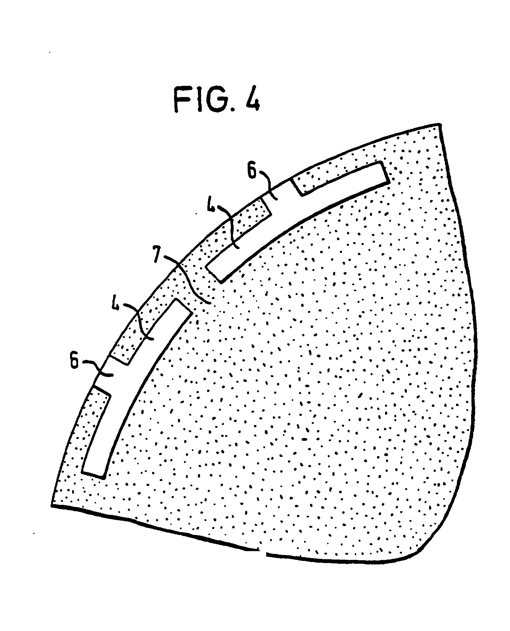

Wie aus den Fig. 2 bis 4 ersichtlich ist, können die zahn- oder zinnenartigen Vorsprünge 4 und die zwischen diesen gebildeten Spalte 5 unterschiedliche Längen bzw. Umfangswinkel einschließen. Auch die nasenförmigen radialen Vorsprünge 6 können unterschiedlich lang und breit ausgebildet sein.

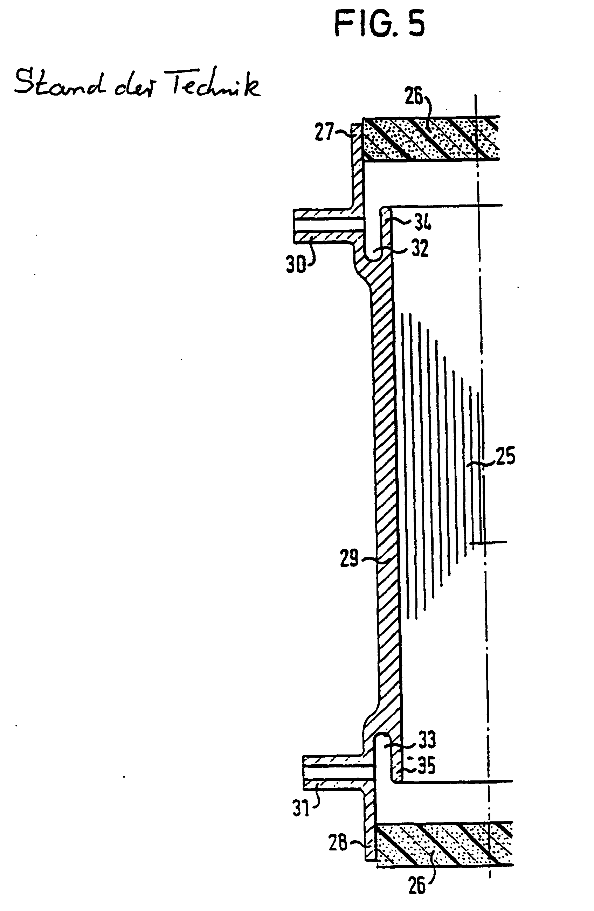

Aus Fig. 5 ist ein Längsschnitt durch das Gehäuse eines bekannten Dialysators ersichtlich. Bei diesem bekannten Dialysator sind die Enden des Hohlfaserbündels 25 von den zu Scheiben 26 ausgehärteten Vergußmassen eingefaßt, die mit den äußeren Rändern 27, 28 des Gehäuses 29 feste Verbindungen eingehen. Im Abstand von den Scheiben 26 ist das Gehäuse mit radialen Stutzen 30, 31 versehen, die in rinnenförmige Ringräume 32, 33 münden, die in der dargestellten Weise durch innere frei auslaufende ringförmige Wandungsabschnitte 34, 35 gebildet sind, deren Ränder im axialen Abstand vor den Scheiben enden. Wird bei senkrecht stehendem Gehäuse beispielsweise in den unteren radialen Stutzen 31 eine Flüssigkeit beziehungsweise Dialysat in den das Hohlfaserbündel 25 aufnehmenden Raum eingeleitet, neigt die Flüssigkeit dazu, hauptsächlich in Bereichen, die nahe an dem Stutzen 31 liegen, über den Rand der die Ringnut 33 begrenzenden Wandung 35 zu treten, so daß sich in dem Gehäuse 29 eine unsymmetrische Flüssigkeits- bzw. Dialysatströmung ausbildet.

Diese unsymmetrische Strömung wird bei der anhand der Fig. 1 bis 4 erläuterten erfindungsgemäßen Hohlfasermembrantrennvorrichtung dadurch vermieden, daß die Flüssigkeit bzw. das Dialysat sich in dem Ringraum 21 verteilt und dann im wesentlichen mit gleicher Umfangsverteilung durch die inneren freien Bereiche der Eintrittsschlitze 5 in den das Hohlfaserbündel einschließenden Raum eintritt. Im dargestellten Ausführungsbeispiel wird der Ringraum 21 nach außen hin durch die zylindrische Wand der Kappe 15 begrenzt, wobei die Kappe mit einem axialen konzentrisch angeordneten Einlaßstutzen versehen ist, so daß sich die Flüssigkeit mit gleichem Druck in dem Ringraum 21 verteilt. Da sich über den Umfang des Ringraums 21 ein im wesentlichen gleicher Druck der Flüssigkeit einstellt, können die durch die freien Bereiche der Eintrittsschlitze 5 gebildeten Eintrittsöffnungen auch gleiche Querschnitte aufweisen.

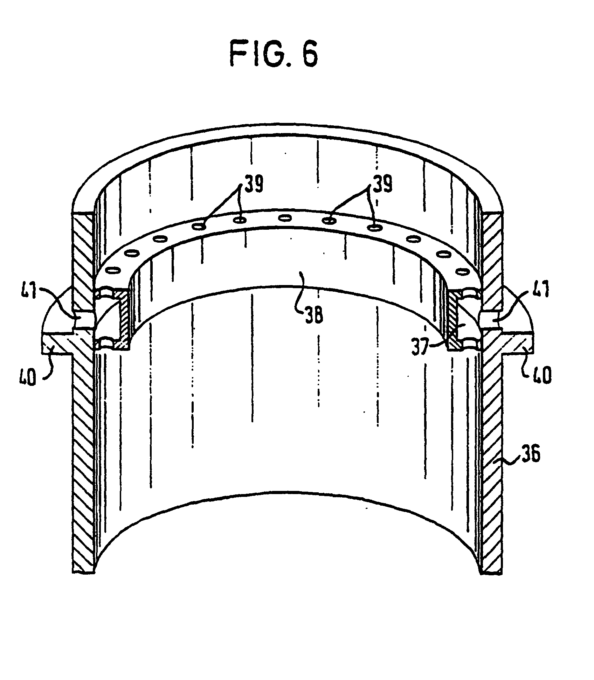

Bei dem Ausführungsbeispiel nach Fig. 6 tritt die Flüssigkeit bzw. das Dialysat durch radiale Bohrungen 41 des rohrabschnittförmigen Gehäuses 36 in einen Ringraum 37 ein, der durch einen U-förmigen Ring 38 gebildet ist, dessen nach außen weisenden Schenkel flüssigkeitsdicht mit dem Gehäusemantel verbunden sind. Der U-förmige Ring 38 ist in seinen Schenkeln mit gleichmäßig über den Umfang verteilten Bohrungen 39 versehen, durch das die in den Ringraum 37 eingeleitete Flüssigkeit in die das Hohlfaserbündel enthaltende Kammer eintreten kann.

Das rohrabschnittförmige Gehäuse ist im Bereich der Unterseite des Ringraums mit einem äußeren radial umlaufenden Flansch 40 versehen, auf den in entsprechender Weise wie bei der anhand der Fig. 1 bis 4 beschriebenen Vorrichtung der Rand einer Kappe aufgesetzt werden kann, so daß zwischen deren zylindrischen Umfangswandung und dem oberen Teil des Gehäuses 6 ein Ringraum gebildet ist, durch den mit gleicher Druckverteilung Flüssigkeit zu dem über den Umfang des Gehäuses verteilten radialen Bohrungen 35 geleitet werden kann.

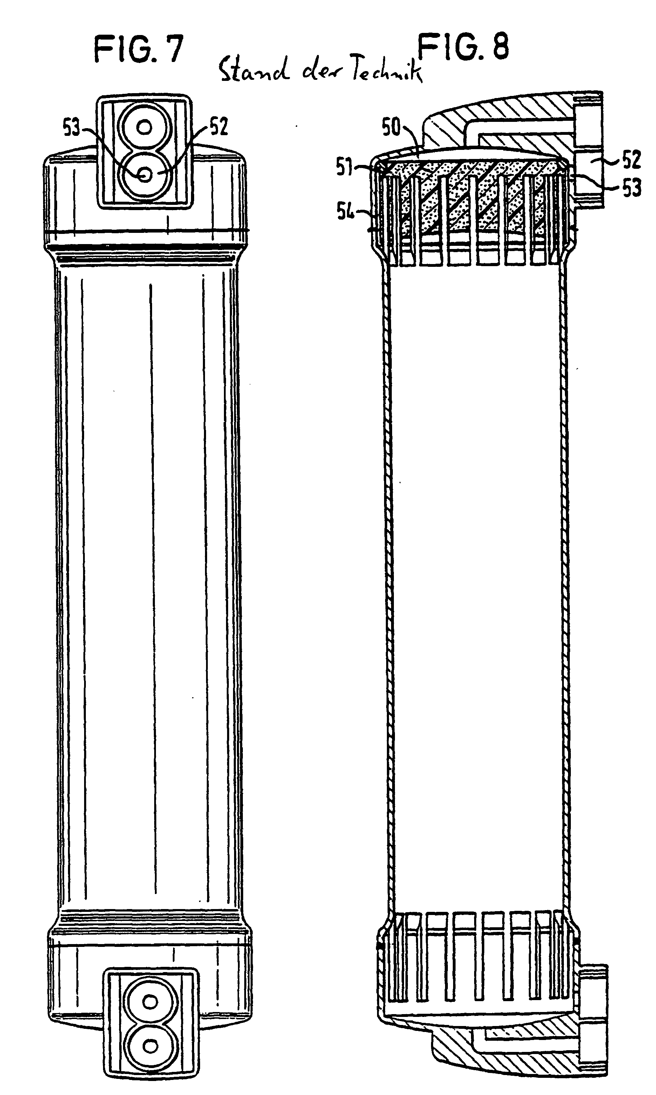

Aus Fig. 7 ist eine Seitenansicht einer bekannten Hohlfasermembrantrennvorrichtung, im dargestellten Fall eines Dialysators, ersichtlich. Bei diesem Dialysator befinden sich die der Konnektierung mit den Tüllen eines Dialysegeräts dienenden Anschlüsse bzw. Anschlußstutzen auf einer Seite und weisen zueinander parallele Mittellinien auf, so daß sie unmittelbar oder durch eine geeignete Vorrichtung dichtend auf die Tüllen der Dialysevorrichtung aufgedrückt werden können.

Bei der aus den Fig. 7 und 8 ersichtlichen bekannten Hohlfasermembrantrennvorrichtung bestehen die oberen und unteren mit den Anschlüssen bzw. Anschlußstutzen versehenen Kappen aus getrennt im Spritzgießverfahren hergestellten Teilen, deren Ränder durch geeignete Schweiß- oder Klebverbindungen stumpf und flüssigkeitsdicht mit den glockenförmig nach außen erweiterten Rändern des Gehäuses verbunden sind.

Wie aus Fig. 8 ersichtlich ist, ist der Blutraum und der die nicht dargestellten Hohlfasem umgebende Dialysatraum durch eine Vergußmasse 50 getrennt. Die Vergußmasse weist an ihrem oberen Randbereich eine umlaufende Ausnehmung aus, in die ein O-Ring 51 zur Abdichtung des Blutraums gegenüber dem Dialysatraum eingelegt ist.

Wie aus Fig. 8 ersichtlich ist, schließt der in den Stutzen 52 mündende Durchbruch 53 unmittelbar an die Unterseite des O-Rings 51 an, wobei sich der Ringraum 54, der der Zu- bzw. Abführung des Dialysats dient, bis an die O-Dichtung erstreckt, so daß kein Totraum vorhanden ist, in dem sich Luftblasen sammeln könnten.

## Patentansprüche

1. Hohlfasermembrantrennvorrichtung (1) mit zwei Strömungsräumen, von denen ein erster Raum, vorzugsweise ein Permeatraum, durch die Röhrenoder Kapillarröhren-Durchgänge eines an seinen Enden in eine Vergußmasse (7) eingegossenen Hohlfaserbündels und ein zweiter Raum, vorzugsweise ein Filtratraum, durch ein das Faserbündel einfassendes Gehäuse (2) gebildet ist,
wobei der erste Raum durch auf die Vergußmassen aufgesetzte Kappen (11, 14) durch über die Randbereiche der Vergußmassen verlaufenden Dichtungen (13) abgedichtet ist und
die Vergußmassen (7) an dem Gehäuse (2) abgestützt sind, wobei die Vergußmassen (7) in diese an ihren Stirnseiten und Umfangsseiten einfassenden Form zu Scheiben ausgehärtet sind,
**dadurch gekennzeichnet,**
**daß** die Kappen (11) mindestens an einem Ende des Hohlfaserbündels übergreifende zweite Kappen (14) vorgesehen sind, deren Ränder mit dem Gehäuse (2) flüssigkeitsdicht verbunden sind, so daß sich zwischen den ersten und zweiten Kappen Zwischenräume ausbilden, die mit dem zweiten Raum in Verbindung stehen, und
**daß** mindestens eine der übergreifenden Kappen (14) mit einem Anschlußstutzen (16) versehen ist.

2. Hohlfasermembrantrennvorrichtung (1) nach Anspruch 1, **dadurch gekennzeichnet, daß** die inneren Ränder der die Vergußmassen (7) übergreifenden zweiten Kappen (14) die Vergußmassen (7) nach innen hin überragen.

3. Hohlfasermembrantrennvorrichtung (1) nach Anspruch 1, **dadurch gekennzeichnet, daß** das rohrabschnittsförmige Gehäuse (2), in das das Hohlfaserbündel eingezogen ist, an den Enden seines Mantels mit durch frei auslaufende, axiale Kerben oder Einschnitte gebildeten zahn- oder zinnenartigen Vorsprüngen (4) versehen ist, deren äußeren Bereiche in die Vergußmassen (7) eingebunden sind, so daß die freien inneren Bereiche der Kerben oder Einschnitte (5) Durchflußöffnungen für Flüssigkeit bilden.

4. Hohlfasermembrantrennvorrichtung (1) nach einem der Ansprüche 1 bis 3, **dadurch gekennzeichnet, daß** das Gehäuse (2) im Bereich der inneren Enden der Vorsprünge (4) mit einem radialen Flansch (3) versehen ist, auf den der Rand (15) der zweiten Kappe (14) dichtend abgestützt oder befestigt ist.

5. Hohlfasermembrantrennvorrichtung (1) nach einem der Ansprüche 1 bis 4, **dadurch gekennzeichnet, daß** der Abstand der Vorsprünge in Umfangsrichtung voneinander größer ist als deren Breite.

6. Hohlfasermembrantrennvorrichtung (1) nach Anspruch 3,
**dadurch gekennzeichnet,**
**daß** die durch die Kerben oder Einschnitte (5) gebildeten zahn- oder zinnenartigen Vorsprünge (4) mit radialen und/oder sich in Umfangsrichtung erstreckenden Vorsprüngen (6) versehen sind.

## Claims

1. A hollow fibre membrane separation device (1) comprising two flow spaces, of which a first space, preferably a permeate space, is formed by the tubular or capillary-tube passages of a hollow fibre bundle cast into a compound (7) at its ends and a second space, preferably a filtrate space, is formed by a housing (2) encompassing the fibre bundle,
wherein the first space is sealed by caps (11, 14) placed onto the compounds by seals (13) extending over the rim regions of the compounds; and
the compounds (7) are supported at the housing (2), with the compounds (7) being hardened to form discs in moulds encompassing these compounds at their end faces and peripheral faces,
**characterized in that**
the second caps (14) engaging over the caps (11) at least at one end of the hollow fibre bundle are provided whose rims are connected to the housing (2) in a liquid-tight manner such that intermediate spaces in communication with the second space are formed between the first and second caps; and
**in that** at least one of the over-engaging caps (14) is provided with a connection stub (16).

2. A hollow fibre membrane separation device (1) in accordance with claim 1, wherein the inner rims of the second caps (14) engaging over the compounds (7) project inwardly beyond the compounds (7).

3. A hollow fibre membrane separation device (1) in accordance with claim 1, wherein the housing (2) in the form of a tubular section into which the hollow fibre bundles is pulled is provided at the ends of its jacket with tooth-like or spire-like projections (4) formed by axial notches or cuts which run out freely and whose outer regions are embedded in the compounds (7) such that the free inner regions of the notches or cuts (5) form throughflow openings for liquid.

4. A hollow fibre membrane separation device (1) in accordance with any of claims 1 to 3, wherein the housing (2) is provided in the region of the inner ends of the projections (4) with a radial flange (3) on which the rim (15) of the second cap (14) is sealingly supported or secured.

5. A hollow fibre membrane separation device (1) in accordance with any of claims 1 to 4, wherein the spacing of the projections in the peripheral direction is larger than their width.

6. A hollow fibre membrane separation device (1) in accordance with claim 3, wherein the tooth-like or spire-like projections (4) formed by the notches or cuts (5) are provided with radial projections (6) and/or projections (6) extending in the peripheral direction.

## Revendications

1. Dispositif de séparation à membrane de fibre creuse (1), comprenant deux espaces d'écoulement, dont un premier espace, de préférence un espace de perméat, est formé par les passages tubulaires ou capillaires d'un faisceau de fibres creuses noyé à ses extrémités dans une composition de scellement (7), et un deuxième espace, de préférence un espace de filtrat, est formé par un boîtier (2) enserrant le faisceau de fibres,
le premier espace étant rendu étanche par des couvercles (11, 14) placés sur les compositions de scellement par des joints (13) s'étendant sur les zones de bord des compositions de scellement et
les compositions de scellement (7) étant supportées sur le boîtier (2), les compositions de scellement (7) étant durcies pour former des disques dans ce moule à enserrage au niveau de ses côtés frontaux et de ses côtés périphériques,
**caractérisé en ce que**
des deuxièmes couvercles (14) venant en prise par le dessus avec les couvercles (11) sont prévus au moins à une extrémité du faisceau de fibres creuses, leurs bords étant connectés au boîtier (2) de manière étanche aux liquides, de sorte qu'il se crée entre les premiers et deuxièmes couvercles des espaces intermédiaires qui sont en liaison avec le deuxième espace, et
**en ce qu'**au moins l'un des couvercles (14) venant en prise par le dessus est pourvu d'une tubulure de raccordement (16).

2. Dispositif de séparation à membrane de fibre creuse (1) selon la revendication 1, **caractérisé en ce que** les bords internes des deuxièmes couvercles (14) venant en prise par le dessus avec les compositions de scellement (7) dépassent des compositions de scellement (7) vers l'intérieur.

3. Dispositif de séparation à membrane de fibre creuse (1) selon la revendication 1, **caractérisé en ce que** le boîtier (2) en forme de portion de tube, dans lequel le faisceau de fibres creuses est introduit, est pourvu aux extrémités de son enveloppe, de saillies (4) en forme de dents ou de créneaux formées par des cannelures ou des entailles axiales se terminant librement, dont les régions extérieures sont incorporées dans les compositions de scellement (7), de sorte que les régions internes libres des cannelures ou des entailles (5) forment des ouvertures de passage pour le liquide.

4. Dispositif de séparation à membrane de fibre creuse (1) selon l'une quelconque des revendications 1 à 3, **caractérisé en ce que** le boîtier (2) est pourvu dans la région des extrémités intérieures des saillies (4) d'une bride radiale (3) sur laquelle est supporté ou fixé hermétiquement le bord (15) du deuxième couvercle (14).

5. Dispositif de séparation à membrane de fibre creuse (1) selon l'une quelconque des revendications 1 à 4, **caractérisé en ce que** la distance des saillies les unes des autres dans la direction périphérique est plus grande que leur largeur.

6. Dispositif de séparation à membrane de fibre creuse (1) selon la revendication 3, **caractérisé en ce que** les saillies (4) en forme de dents ou de créneaux formées par les cannelures ou les entailles (5) sont pourvues de saillies (6) radiales et/ou s'étendant dans la direction périphérique.
